# EUROPÄISCHE PATENTSCHRIFT

(11) **EP 3 453 569 B1**
(45) Veröffentlichungstag und Bekanntmachung des Hinweises auf die Patenterteilung: **06.01.2021**
(21) Anmeldenummer: 18190544.9
(22) Anmeldetag: 23.08.2018
(51) Int. Cl.: B60P 7/15

(54) **SPERRBALKEN**
BLOCKING BAR
POUTRES DE BLOCAGE

(30) Priorität: 08.09.2017 DE 202017105457 U
(43) Veröffentlichungstag der Anmeldung: 13.03.2019
(73) Patentinhaber: WISTRA GmbH Cargo Control, 23923 Selmsdorf (DE)
(72) Erfinder: BIRENHEIDE, Christian, 23919 Berkenthin (DE)
(74) Vertreter: Patentanwälte Vollmann Hemmer Lindfeld Partnerschaft mbB

(56) Entgegenhaltungen:
- DE-U- 1 806 986
- US-A- 2 896 554
- US-A- 3 130 690

## Beschreibung

Die Erfindung betrifft einen Sperrbalken für ein Ladungssicherungssystem mit Zurrpunkten, welche mindestens einen Steg aufweisen, mit hakenförmigen Formschlusselementen an den Enden des Sperrbalkens.

Ladungssicherungssysteme für Fahrzeuge zählen heutzutage in unterschiedlichen Ausführungen zum Stand der Technik. Die Ladungssicherung erfolgt dabei mit Zurrgurten, Netzen, Sperrbalken und dergleichen, wobei sich auf dem Markt unterschiedliche Systeme etabliert haben, die sich im Wesentlichen in der Ausbildung der Zurrpunkte, d. h. der Punkte unterscheiden, mit welchen die Ladungssicherungen fahrzeugseitig festgelegt werden.

Ein bekanntes Ladungssicherungssystem ist das sogenannte "Airline-System", welches fahrzeugseitig festgelegte Zurrschienen aufweist, welche eine Vielzahl von Zurrpunkten über die Länge der Schiene bilden. Aus EP 2 907 696 A1 zählt ein Sperrbalken zum Stand der Technik, welcher zur Verwendung mit Airline-Systemen vorgesehen ist und welcher in einfacher und sicherer Weise in solchen Airline-Schienen im Fahrzeug festgelegt werden kann.

Für andere Sicherungssysteme, beispielsweise mit Rundloch-Zurrschienen oder Schlüsselloch-Zurrschienen, ist dieser Sperrbalken aufgrund der Inkompatibilität der Zurrpunkte bzw. der Zurrbeschläge nicht geeignet.

Es ist ein Ladungssicherungssystem verbreitet, bei welchem die Zurrpunkte durch einen Steg gebildet sind, sei es, dass Einzelzurrpunkte durch einen Beschlag mit einer Längsausnehmung, die durch einen Quersteg unterbrochen ist, gebildet sind oder aber Schienen Verwendung finden, welche eine tiefe Längsnut aufweisen, die durch Stege unterbrochen ist. Diese Stege dienen zum Festlegen von Ladungssicherungsbeschlägen, welche typischerweise hakenförmig ausgebildet sind und in montiertem Zustand einerseits einen Steg übergreifen, andererseits seitlich in der Ausnehmung bzw. Nut festgelegt sind.

Aus US 3,130,690 A und DE 1 806 986 U zählen Sperrbalken zum Stand der Technik, an deren Enden hackenförmige Formschlusselemente angeordnet sind, die nach Art einer Zange an einem wandseitig des Fahrzeugs angeordneten Steg, diesen umgreifend formschlüssig festlegbar sind. Die Steuerung dieser Hacken erfolgt manuell über entsprechende Handhaben, die entgegen Federkraft zum Öffnen verschwenkt bzw. verschoben werden können. US 3,130,690 A1 offenbart den Oberbegriff des Anspruchs 1. Ein ähnliches Ladungssicherungssystem für Fahrzeuge ist aus US 2,896,554 A bekannt.

Aufgabe der vorliegenden Erfindung ist es, einen Sperrbalken für ein Ladungssicherungssystem mit Zurrpunkten der vorbeschriebenen Art, also welche mindestens einen Steg aufweisen, bereitzustellen, welche einerseits hohe Kräfte aufnehmen können, andererseits sicher und einfach zu befestigen sind und die sich nicht von selbst lösen können.

Diese Aufgabe wird gemäß der Erfindung durch einen Sperrbalken mit den in Anspruch 1 angegebenen Merkmalen gelöst. Vorteilhafte Ausgestaltungen der Erfindung ergeben sich aus den Unteransprüchen, der nachfolgenden Beschreibung und den Zeichnungen.

Der erfindungsgemäße Sperrbalken ist für ein Ladungssicherungssystem mit Zurrpunkten vorgesehen, welche mindestens einen Steg aufweisen. Beispielsweise handelt es sich hierbei um Zurrpunkte, welche durch einen Beschlag gebildet sind, welcher eine längliche Ausnehmung aufweist, die durch einen Steg unterbrochen ist, wobei der Steg derart beabstandet von der Montagefläche ist, dass ein hakenförmiger Beschlag diesen hintergreifen kann. Dabei wird der erfindungsgemäße Sperrbalken vorteilhaft in Verbindung mit im Fahrzeug befestigten Schienen verwendet, welche zum Beispiel senkrecht verlaufen, eine vergleichsweise tiefe durchgehende Nut aufweisen und die nahe ihrer offenen Seite durch im Abstand über die Länge angeordnete Querstege unterbrochen ist. Derartige Schienen und Beschläge sind beispielsweise unter der Bezeichnung "Pro Safe" von der Firma Sortimo im Markt verfügbar.

Der Sperrbalken weist hakenförmige Formschlusselemente an den Enden auf und ist dadurch gekennzeichnet, dass an mindestens einem Ende des Sperrbalkens, vorzugsweise jedoch an beiden Enden des Sperrbalkens jeweils zwei zueinander offene hakenförmige Formschlusselemente angeordnet sind, welche in einer ersten offenen Stellung zur Aufnahme eines Stegs des Zurrpunktes zumindest an ihren freien Enden beabstandet sind und die in einer zweiten geschlossenen Stellung den Steg formschlüssig umgreifend angeordnet sind. In letzterer Stellung sind die Formschlusselemente vorzugsweise verriegelbar, damit ein unbeabsichtigtes Lösen sicher ausgeschlossen ist.

Grundgedanke dabei ist es, den Sperrbalken vorzugsweise an seinen beiden Enden in sämtliche Richtungen formschlüssig in einem Zurrpunkt festzulegen, um sicherzustellen, dass sich dieser nicht versehentlich löst und um hohe Kräfte sicher aufnehmen zu können. Dabei ist die Konstruktion der Endbeschläge so gestaltet, dass zwei hakenförmige Formschlusselemente gegenüberliegend angeordnet sind, also so, dass quasi ein Haken den Steg von der einen und der andere gleichzeitig von der anderen Seite umgreifen kann und somit unabhängig von der Montagestellung in sämtliche Richtungen formschlüssig sichert. Dabei ist eine offene Stellung vorgesehen, in welcher die Haken zumindest an ihren freien Enden beabstandet sind, sodass der Beschlag offen zur Aufnahme eines Steges ist und eine geschlossene Stellung, in welcher der Steg von den beiden hakenförmigen Formschlusselementen vollständig oder nahezu vollständig umschlossen ist, der Sperrbalken also formschlüssig am Steg festgelegt ist. Vorzugsweise sind diese Endbeschläge an beiden Enden des Sperrbalkens vorgesehen, es kann jedoch auch nur an einem Ende ein solcher, den Steg vollständig umfassender Endbeschlag mit zwei zueinander offenen hakenförmigen Formschlusselementen vorgesehen sein und am anderen Ende ein einfacher Haken oder anderer geeigneter Beschlag. Unter "hakenförmig" im Sinne der vorliegenden Erfindung ist auch eine vereinfachte Hakenform, beispielsweise eine L-Form zu verstehen, wesentlich ist, dass von zwei hakenförmigen
Formschlusselementen in geschlossener Stellung ein Freiraum zur Aufnahme des Steges gebildet ist, der so geschlossen ist, dass der Steg nicht versehentlich oder kraftbedingt entweichen kann.

Um eine sichere und zugleich einfache Handhabung des Sperrbalkens beim Festlegen in einem Zurrpunkt zu gewährleisten, ist gemäß der Erfindung ein Steuerelement zur Steuerung der Stellung der Formschlusselemente vorgesehen, welches in Längsrichtung des Sperrbalkens axial verschiebbar angeordnet ist und welches durch einen Steg eines Zurrpunktes, an dem das Ende des Sperrbalkens festgelegt werden soll, : steuerbar ist. Bei geeigneter Ausbildung eines solchen Steuerelementes, wie weiter unten noch im Einzelnen ausgeführt, kann eine nahezu selbsttätige Festlegung eines Sperrbalkenendes am Steg des Zurrpunktes erreicht werden, einfach indem der Sperrbalken mit seinem Ende auf den Steg eines Zurrpunktes aufgesetzt wird, wobei der Steg bei weiterem Andrücken des Sperrbalkens das Steuerelement in Richtung des Sperrbalkens bewegt, wodurch die hakenförmigen Formschlusselemente von der offenen Stellung in die geschlossene Stellung bewegt werden, in welcher sie den Steg umschließen und somit formschlüssig umgreifend angeordnet sind.

Besonders vorteilhaft ist es, wenn der Sperrbalken gemäß einer Weiterbildung der Erfindung zur Längenanpassung an den Abstand zweier Zurrpunkte teleskopierbar ausgebildet ist. Hierzu ist er aus teleskopierbaren Rohren aufgebaut, die vorzugsweise begrenzt zueinander beweglich sind, sodass der Sperrbalken nicht in zwei Teile auseinander gezogen werden kann, sondern nur in vorgegebenen Maßen längenveränderbar ist. Letzteres ist im Übrigen auch zweckmäßig, um ein Festlegen an beiden Enden jeweils mittels zweier hakenförmiger Formschlusselemente zu realisieren. Hierzu weist der Sperrbalken vorteilhaft zwei Rohre auf, die durch ein gemeinsames Teleskoprohr verbunden sind, d. h. zwei Rohre, die entweder ein gemeinsames Teleskoprohr an beiden Seiten übergreifen oder in ein solches eingesteckt sind. Vorzugsweise ist dabei ein Rohr fest mit dem Teleskoprohr verbunden und das andere Rohr axial begrenzt beweglich. Grundsätzlich können jedoch auch beide Rohre axial begrenzt beweglich mit dem Teleskoprohr verbunden sein. Eine Festverbindung zweier solcher Rohre kann in einfacher Weise durch einen beide Rohre durchsetzenden Querstift oder Niet gebildet sein, eine axial begrenzt bewegliche Verbindung durch einen Querstift, der in einem Rohr festgelegt und im anderen Rohr in einer Längsnut geführt ist. Die Enden der Längsnut begrenzen dann den Ausfahrweg.

Grundsätzlich kann die Mechanik, welche die Bewegung zwischen dem Steuerelement und den hakenförmigen Formschlusselementen bewirkt, am Ende eines Rohres des Sperrbalkens vorgesehen sein, besonders vorteilhaft ist es jedoch, wenn diese an einem Ende eines rohrförmigen Endstückes vorgesehen ist, welches fest mit dem daran anschließenden Rohr des Sperrbalkens verbunden ist, wobei an diesem rohrförmigen Endstück die hakenförmigen Formschlusselemente angeordnet sind und das Steuerelement zumindest teilweise aufgenommen und axial begrenzt beweglich geführt ist. Diese Ausgestaltung ist insbesondere fertigungstechnisch von Vorteil, da ein solches rohrförmiges Endstück mit der daran angeordneten Mechanik für die hakenförmigen Formschlusselemente sowie das Steuerelement unabhängig von der Längendimensionierung des Sperrbalkens gefertigt werden kann, sodass Sperrbalken unterschiedlicher Länge mit gleichem Endstück versehen werden können. Auch ist es mit dieser Ausgestaltung relativ einfach möglich, Sondermaße des Sperrbalkens zu realisieren, und zwar unter weitgehender Beibehaltung vorhandener Bauteile.

Die mechanische Kopplung zwischen den hakenförmigen Formschlusselementen und dem Steuerelement kann auf unterschiedliche Weise erfolgen, beispielsweise durch Bahnführungen zwischen den Bauteilen, besonders vorteilhaft ist es jedoch, wenn die hakenförmigen Formschlusselemente an ihrem sperrbalkenseitigen Ende nahe dem freien Ende des Endstückes an diesem angelenkt sind, und zwar derart, dass deren Schwenkachsen parallel zueinander und vorzugsweise in einer Querebene angeordnet sind, welche senkrecht zur Längsachse des Sperrbalkens liegt.

Bei einer solchen Anordnung kann das Steuerelement mit den hakenförmigen Formschlusselementen vorteilhaft derart bewegungsgekoppelt werden, dass beim Einfahren des Steuerelementes in den Sperrbalken die hakenförmigen Formschlusselemente von ihrer offenen in die geschlossene Stellung bewegt werden und damit den Steg des Zurrpunktes vollständig oder nahezu vollständig umgreifen.

Das Steuerelement, das zapfenförmig oder auch als Blechteil ausgebildet sein kann, weist vorteilhaft an seinen Längsseiten jeweils eine Ausnehmung auf, in welche ein Vorsprung eingreift, welcher an einem hakenförmigen Formschlusselement vorgesehen und mit radialem Abstand zur Schwenkachse angeordnet ist. Dabei ist der Vorsprung nicht nur mit radialem Abstand zur Schwenkachse, sondern im Wesentlichen auch quer zur Längserstreckung des hakenförmigen Formschlusselementes angeordnet, um die Längsbewegung des Steuerelementes in eine Schwenkbewegung des Formschlusselementes umsetzen zu können. Besonders vorteilhaft ist es dabei, wenn die Ausnehmungen an den beiden gegenüberliegenden abgewandten Längsseiten des Steuerelementes auf gleicher Höhe angeordnet sind, da dann bei geeigneter konstruktiver Ausgestaltung die hakenförmigen Formschlusselemente für beide Seiten gleich ausgebildet sein können, d. h., typischerweise nur formgleiche Stanzteile zu fertigen sind.

Vorteilhaft ist das Steuerelement in Ausfahrrichtung federkraftbeaufschlagt, was beispielsweise durch eine Schraubenfeder gebildet sein kann, die sich einerseits am inneren Ende des Steuerelementes und andererseits zum Beispiel an einem Querbolzen abstützt, mit welchem das Rohrendstück mit dem Rohr verbunden ist.

Um sicherzustellen, dass sich die Formschlussverbindung zwischen den hakenförmigen Formschlusselementen und dem Steg nicht unbeabsichtigt löst, ist gemäß einer vorteilhaften Weiterbildung der Erfindung eine vorzugsweise selbsttätig wirkende Verriegelung vorgesehen. Eine solche Verriegelung ist durch mindestens einen Sperr- oder Riegelkörper, vorzugsweise in Form einer Kugel, gebildet sowie mindestens einer entsprechend der Größe des Sperrkörpers dimensionierten Ausnehmung im rohrförmigen Endstück, oder, wenn ein solches nicht vorgesehen ist, im Rohrende. Weiterhin ist fluchtend zu der Ausnehmung im Endstück eine seitliche Ausnehmung, vorzugsweise eine Nut, im Steuerelement angeordnet, sodass dann, wenn das Steuerelement durch axiale Einfahrbewegung in den Sperrbalken mit seiner Ausnehmung bzw. der Nut in Höhe der Ausnehmung des Endstückes gelangt, dieser Sperrkörper sowohl in der Ausnehmung des Endstückes als auch gleichzeitig in der Ausnehmung des Steuerelementes angeordnet ist und die beiden Teile damit in axialer Richtung bewegungskoppelt, d. h. das Steuerelement in Bezug auf das Endstück festliegt. In dieser Stellung ist die Bewegung des Steuerelementes gesperrt und somit auch ein Bewegen der hakenförmigen Formschlusselemente von der geschlossenen in die offene Stellung nicht möglich.

Diese vorbeschriebene verriegelte Stellung kann vorteilhaft dadurch gesichert werden, dass gemäß einer Weiterbildung der Erfindung umfänglich des Endstückes bzw. des Endrohres, wenn kein solches Endstück vorgesehen ist, eine Riegelhülse axial verschiebbar vorgesehen ist, welche in einer federbelasteten Endstellung den Sperrkörper in seiner Sperrstellung formschlüssig verriegelt. Dabei ist vorteilhaft die Riegelhülse derart federkraftbeaufschlagt, dass sie selbsttätig in die formschlüssig verriegelnde Sperrstellung geschoben wird und nur entgegen dieser Federkraft durch beispielsweise manuellen Eingriff so weit zurückgezogen werden kann, dass ein Freiraum für einen Teil des Sperrkörpers gebildet ist, der dann aus der seitlichen Ausnehmung des Steuerelementes austreten kann, sodass das Steuerelement nicht mehr formschlüssig festgelegt ist. In der Praxis genügt also das axiale Verschieben entgegen Federkraft von Hand, um den Sperrbalken wieder zu lösen, da, sobald der Sperrkörper außer Eingriff mit der Ausnehmung des Steuerelementes gelangt, dieses federkraftbedingt aus dem Sperrbalken herausgeschoben wird bzw. der Sperrbalken gegenüber dem Steuerelement, welches sich am Steg des Zurrpunktes abstößt, zurückgeschoben wird und dabei die hakenförmigen Formschlusselemente in ihre offene, den Steg freigebende Stellung geschwenkt werden. Vorteilhaft sind über den Umfang verteilt mehrere Sperrkörper vorgesehen, die in entsprechenden Ausnehmungen im Endstück bzw. Endrohr vorgesehen sind, die entweder in eine umlaufende Nut des Steuerelementes eingreifen oder bei Freigabe des Steuerelementes in eine umlaufende Nut der Riegelhülse austreten.

Die Erfindung ist nachfolgend anhand eines in den Zeichnungen dargestellten Ausführungsbeispiels näher erläutert. Es zeigen:

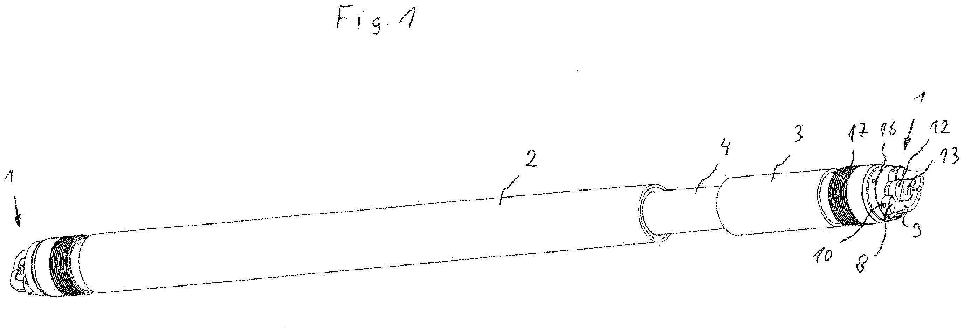

- Fig. 1: in stark vereinfachter schematischer perspektivischer Darstellung einen Sperrbalken gemäß der Erfindung,
- Fig. 2: eine Seitenansicht auf den Sperrbalken gemäß Fig. 1 mit geöffneten Endbeschlägen,
- Fig. 3: eine gegenüber Fig. 2 um 90° gedrehte Seitenansicht des Sperrbalkens,
- Fig. 4: einen Schnitt längs der Schnittlinien A - A in Fig. 3,

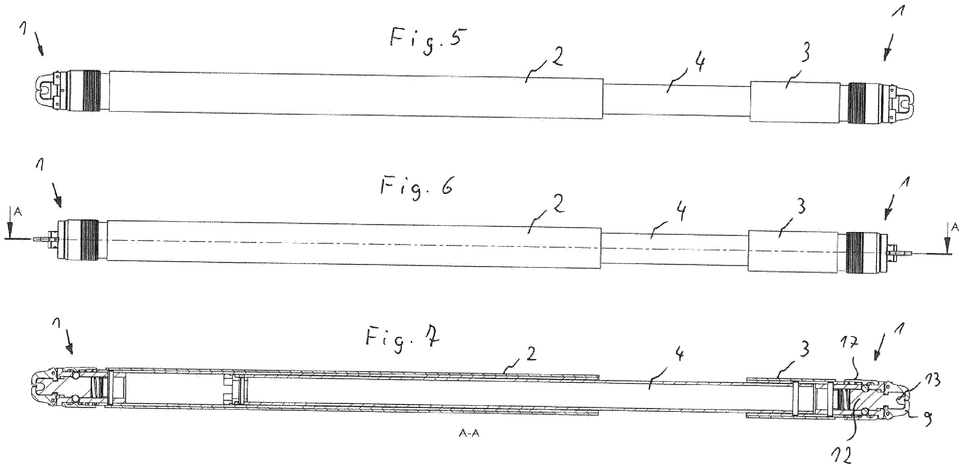

- Fig. 5: den Sperrbalken in Darstellung gemäß Fig. 2 mit geschlos-senen Endbeschlägen,
- Fig. 6: den Sperrbalken gemäß Fig. 5 in Darstellung entsprechend Fig. 3,
- Fig. 7: einen Schnitt längs der Schnittlinie A - A in Fig. 6,
- Fig. 8: in vergrößerter Darstellung ein Ende des Sperrbalkens in Darstellung entsprechend Fig. 6 mit zugehöriger Zurrbeschlagschiene,
- Fig. 9: eine gegenüber Fig. 8 um 90° gedrehte Darstellung des Sperrbalkens,
- Fig. 10: einen Schnitt längs der Schnittlänge A - A in Fig. 8,
- Fig. 11: den Sperrbalken in Darstellung gemäß Fig. 8 mit geschlossener, aber noch nicht verriegelter Stellung des Endbeschlages,
- Fig. 12: eine gegenüber Fig. 11 um 90° gedrehte Darstellung und
- Fig. 13: einen Schnitt längs der Schnittlinie A - A in Fig. 11.

Bei dem dargestellten Sperrbalken handelt es sich um einen teleskopierbaren, d. h. in seiner Länge veränderbaren Sperrbalken mit Endbeschlägen 1, welche für ein Ladungssicherungssystem mit Zurrpunkten ausgelegt sind, die mindestens einen Steg aufweisen. Der Sperrbalken weist zwei Rohre 2 und 3 gleichen Querschnitts auf, die über ein gemeinsames Teleskoprohr 4 miteinander verbunden sind, welches mit dem Rohr 3 fest und mit dem Rohr 2 axial begrenzt beweglich verbunden ist, damit die Länge des Sperrbalkens durch axiales Verschieben der Rohre 2 und 3 zueinander in Grenzen geändert werden kann.

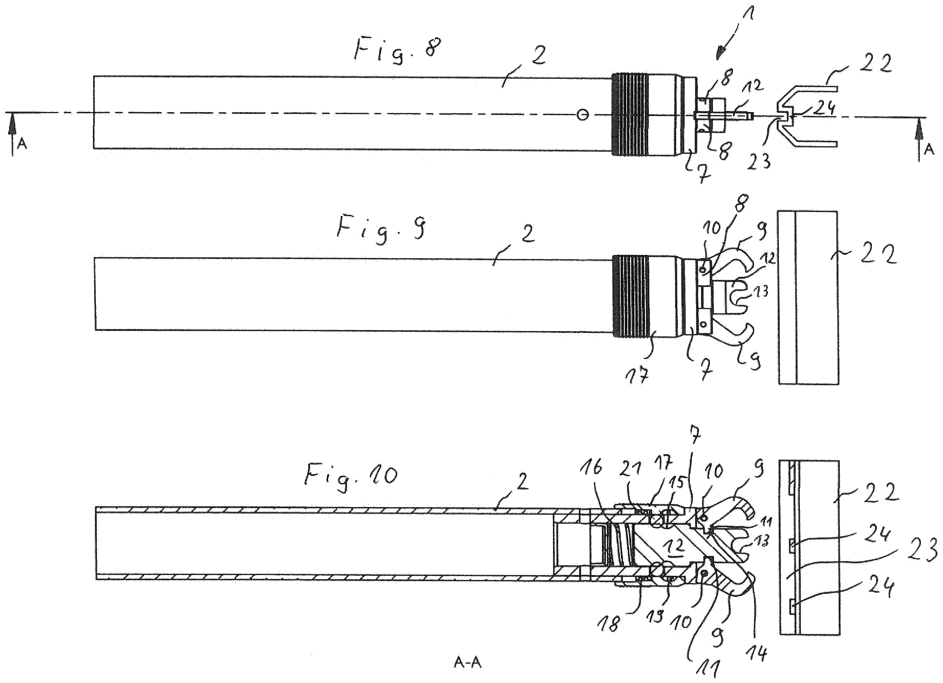

Die Rohre 2 und 3 sind an ihren freien Enden jeweils fest mit einem rohrförmigen Endstück 5 verbunden, welches den eigentlichen Endbeschlag 1 aufweist. Die rohrförmigen Endstücke 5 mit den daran angeordneten Bauteilen sind bei der dargestellten Ausführungsform an beiden Enden des Sperrbalkens gleich, weshalb im Folgenden der Aufbau im Einzelnen anhand eines der Enden des Sperrbalkens, wie es in den Fig. 8 - 13 dargestellt ist, beschrieben ist.

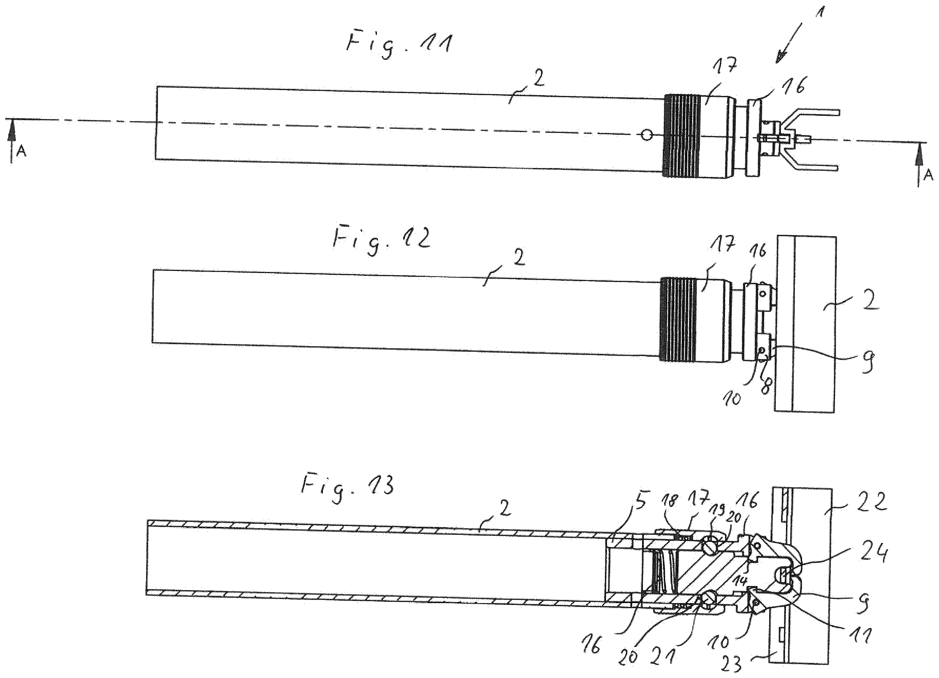

Ein rohrförmiges Endstück 5 ist in das freie Ende des Rohres 2 bzw. des Rohres 3 eingesteckt und dort mittels eines Querbolzens 6 verbunden, welcher beide der ineinander gesteckten Rohre 2, 5 bzw. 3, 5 durchsetzt. Dieser die Bauteile verbindende Querbolzen ist in den Fig. 10 und 13 nicht dargestellt.

Zum freien Ende des rohrförmigen Endstückes 5 hin ist ein ringförmiger Körper 7 gebildet, welcher radial nach innen und nach außen den übrigen Querschnitt des rohrförmigen Endstückes 5 überragt. Auf diesem ringförmigen Körper 7 ist stirnseitig eine durch zwei beabstandete Schenkel 8 gebildete Aufnahme für ein hakenförmiges Formschlusselement 9 gebildet, welches mittels einer Achse 10 schwenkbar zwischen den Schenkeln 8 angeordnet ist. Das hakenförmige Formschlusselement 9 ist als Stanzteil ausgebildet und hat in Draufsicht (Fig. 10/Fig. 13) etwa die Form eines L, wobei es am Ende des langen Schenkels an der Achse 10 befestigt ist und mit Abstand zur Achse 10 einen Vorsprung 11 aufweist. Die Anordnung der Formschlusselemente 9 ist so, dass ihre kurzen Schenkel in der in Fig. 13 dargestellten geschlossenen Stellung aneinanderstoßen und dann ihre langen Schenkel etwa parallel sind und in Längsrichtung des Sperrbalkens verlaufen. Die Achsen 10, welche zugleich die Drehachsen für die hakenförmigen Formschlusselemente 9 bilden, sind parallel zueinander und mit Abstand angeordnet, sodass die Drehachsen in einer Ebene quer zur Längsachse des Sperrbalkens liegen.

Innerhalb des rohrförmigen Endstücks 5 ist ein Steuerelement 12 verschiebbar gelagert, welches einen inneren, im Querschnitt kreisrunden Abschnitt aufweist, an dessen Stirnseite sich ein den ringförmigen Körper 7 durchsetzender und nach außen vorspringender flacher Körper anschließt, welcher an seinem freien Ende eine stirnseitige Einbuchtung 13 aufweist, sowie an seinen Längsseiten Ausnehmungen 14, welche zur Aufnahme der Vorsprünge 11 der hakenförmigen Formschlusselemente 9 vorgesehen sind. Weiterhin weist das Steuerelement 12 im Bereich seines zylindrischen Körpers eine umlaufende Nut 15 auf und ist so ausgebildet und angeordnet, dass es innerhalb des ringförmigen Körpers 7 axial verschiebbar, jedoch nicht drehbar ist, sodass die Orientierung des vorderen flachen Teils des Steuerelementes 12 mit der vorderen Einbuchtung 13 zu den Formschlusselementen 9 stets gleich bleibt. Das Steuerelement 12 ist in Ausfahrrichtung durch eine Schraubenfeder 16 kraftbeaufschlagt, welche sich einerseits an der inneren Stirnseite des Steuerelementes 12 und andererseits an dem Querbolzen 6 abstützt.

Am Außenumfang des rohrförmigen Endstückes 5 ist eine Hülse 17 angeordnet, deren zum ringförmigen Körper 7 weisender Teil eine Riegelhülse bildet und deren nach innen gerichteter Teil eine Führung auf dem Rohr 2 bzw. 3 bildet. Zwischen der Stirnseite des Rohres 2 und einem Absatz innerhalb der Hülse 7 ist eine Schraubenfeder 18 angeordnet, welche die Hülse 17 in Richtung zum ringförmigen Körper 7 kraftbeaufschlagt und diese, wenn dort kein Hindernis ist, auch bis zur Anlage an den ringförmigen Körper 7 schiebt. Die Hülse 17 weist innen eine umlaufende Nut 19 auf, welche durch Längsverschieben auf dem rohrförmigen Endstück 5 in Höhe von kreisrunden Ausnehmungen 20 im rohrförmigen Endstück 5 bringbar ist, derart, dass Sperrkörper in Form von Kugeln 21, welche jeweils in den Ausnehmungen 20 angeordnet sind, in eine entsperrende Stellung in die durch die Nut 17 und die Ausnehmungen 20 gebildeten Freiräume bringbar sind oder, wenn die Hülse 17 bis zum ringförmigen Körper 7 vorgeschoben ist und die Kugeln 21 in den Ausnehmungen 20 und der Nut 15 angeordnet sind, die Bewegung des Steuerelementes 12 in Bezug auf das Endstück verriegeln. Dann hält die über die Ausnehmungen 20 geschobene Hülse 17 die Kugeln 21 in dieser Position, solange, bis die Hülse 17 durch manuellen Eingriff entgegen der Kraft der Schraubenfeder 18 zurückgezogen wird.

In den Fig. 8 - 13 ist nicht nur das Sperrbalkenende, sondern auch der zugehörige Zurrpunkt in Form eines Zurrbeschlages dargestellt. Bei dem dargestellten Zurrbeschlag handelt es sich um eine Schiene 22, welche über ihre gesamte Länge eine Nut 23 aufweist, die in Abständen durch Stege 24 unterbrochen ist. Die Nut 23 ist, wie die Fig. 11 - 13 verdeutlichen, so tief, dass ein Steg 24 von den hakenförmigen Formschlusselementen 9 hintergriffen werden kann, so wie dies in Fig. 13 dargestellt ist.

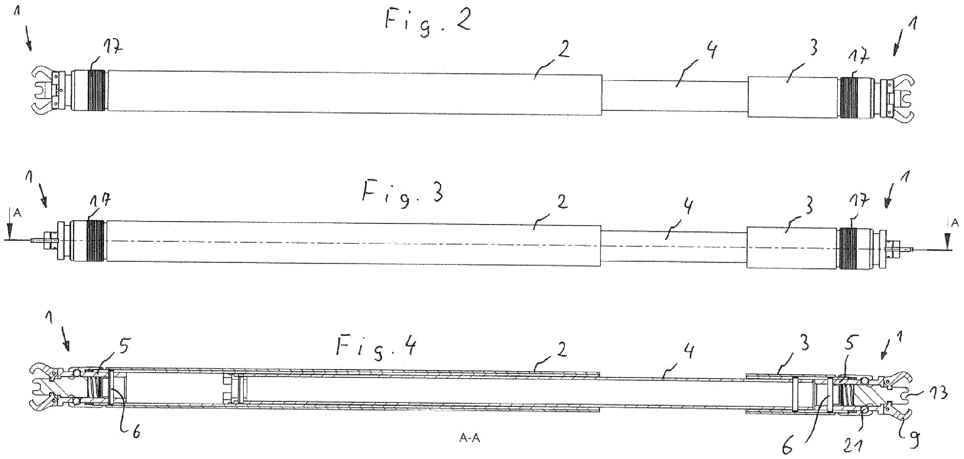

Zum Festlegen eines Endbeschlages 1 des Sperrbalkens im Zurrpunkt, also am Steg 24 der Schiene 22, wird der Sperrbalken mit dem Endbeschlag in der Ausgangsstellung, wie er anhand der Fig. 2 - 4 dargestellt ist, mit den hakenförmigen Formschlusselementen 9 in ihrer geöffneten Stellung und dem zum freien Ende hin ausgefahrenen Steuerelement 12 mit der stirnseitigen Einbuchtung 13 des Steuerelementes 12 zur Anlage an einen Steg 24 eines Zurrpunktes gebracht. Dabei sind die Formschlusselemente 9, wie in den Fig. 2 und 4 sichtbar, weit aufgeschwenkt, das Steuerelement 12 ist durch die Federkraft der Feder 16 aus dem Sperrbalken herausgeschoben und hat über die in den Ausnehmungen 14 angeordneten Vorsprünge 11 die Formschlusselemente 9 ausgeschwenkt. Die Hülse 17 ist durch die in der Nut 19 liegenden Kugeln 21, welche teils in den Ausnehmungen 20, teils in der Nut 19 liegen, auf dem Endstück 5 festgelegt. Sobald der Steg 24 die vordere Einbuchtung 13 des Steuerelementes 12 erreicht, wird der Sperrbalken entgegen Federkraft der Schraubenfeder 16 weiter zum Steg 24 hin geschoben, wodurch, da der Steg 24 feststehend ist, das Steuerelement 12 in das Innere des rohrförmigen Endstückes 5 geschoben wird und dabei über die in den Ausnehmungen 14 liegenden Vorsprünge 11 die hakenförmigen Formschlusselemente 9 in die geschlossene Stellung verfahren, in welcher die Stirnseiten der kurzen Schenkel der Formschlusselemente 9 aneinander anliegen und der Steg 24 durch die vordere Einbuchtung 13 des Steuerelementes 12 in Verbindung mit den von beiden Seiten umfassenden hakenförmigen Formschlusselementen 9 im Endbeschlag 1 formschlüssig festgelegt. Dabei ist die Nut 15 beim Einschieben in das rohrförmige Endstück 5 in Überdeckung mit den Ausnehmungen 20 gekommen, die in den Ausnehmungen 20 befindlichen Kugeln 21 sind aufgrund der Federkraft der Schraubenfeder 18 radial nach innen ausgewichen, sodass die Kugeln 21 in der Nut 15 und den Ausnehmungen 20 angeordnet sind und der verriegelnde Teil der Hülse 17 durch die Federkraft über die Ausnehmungen 20 geschoben worden ist und die Hülse 17 am ringförmigen Körper 7 anliegt. In dieser Stellung ist die Verbindung des Endbeschlages 1 mit dem Steg 24 des Zurrpunktes formschlüssig gesichert und kann nur durch gezielten manuellen Eingriff gelöst werden.

Zum Lösen ist die Hülse 17 manuell so weit zurückzuziehen, dass die Nut 19 in Überdeckung mit den Ausnehmungen 20 kommt, sodass die Kugeln 21 radial nach außen ausweichen können und das Steuerelement 12 in seiner axialen Bewegung nach außen freigegeben wird. Diese Bewegung erfolgt aufgrund der Federkraft der Schraubenfeder 16 und spreizt die Formschlusselemente 9 in ihre geöffnete Stellung, womit die eingangs beschriebene Ausgangsstellung wieder erreicht ist.

### Bezugszeichen

- 1: Endbeschläge
- 2: langes Rohr
- 3: kurzes Rohr
- 4: Teleskoprohr
- 5: rohrförmiges Endstück
- 6: Querbolzen
- 7: ringförmiger Körper
- 8: Schenkel
- 9: hakenförmiges Formschlusselement
- 10: Achse
- 11: Vorsprung an 9
- 12: Steuerelement
- 13: stirnseitige Einbuchtung am Steuerelement
- 14: seitliche Ausnehmungen am Steuerelement
- 15: umlaufende Nut am Steuerelement
- 16: Schraubenfeder
- 17: Hülse
- 18: Schraubenfeder
- 19: Nut in der Hülse
- 20: Ausnehmungen im rohrförmigen Endstück 5
- 21: Kugeln
- 22: Schiene
- 23: Nut
- 24: Stege

## Patentansprüche

1. Sperrbalken für ein Ladungssicherungssystem mit Zurrpunkten, welche mindestens einen Steg (24) aufweisen, mit hakenförmigen Formschlusselementen (9) an den Enden des Sperrbalkens, wobei an mindestens einem, vorzugsweise beiden Enden des Sperrbalkens zwei zueinander offene hakenförmige Formschlusselemente (9) angeordnet sind, welche in einer ersten offenen Stellung zur Aufnahme eines Stegs (24) zumindest an ihren freien Enden beabstandet und in einer zweiten geschlossenen, den Steg (24) formschlüssig umgreifend angeordnet sind, **dadurch gekennzeichnet, dass** ein Steuerelement (12) zur Steuerung der Stellung der Formschlusselemente (9) vorgesehen ist, welches in Längsrichtung des Sperrbalkens axial verschiebbar angeordnet ist und durch einen Steg (24) eines Zurrpunktes steuerbar ist.

2. Sperrbalken nach Anspruch 1, **dadurch gekennzeichnet, dass** die zweite geschlossene Stellung verriegelbar ist.

3. Sperrbalken nach Anspruch 1 oder 2, **dadurch gekennzeichnet, dass** der Sperrbalken zur Längenänderung vorzugsweise begrenzt zueinander teleskopierbare Rohre (2, 4) aufweist.

4. Sperrbalken nach einem der vorhergehenden Ansprüche, **dadurch gekennzeichnet, dass** der Sperrbalken zwei Rohre (2, 3) aufweist, die durch ein gemeinsames Teleskoprohr (4) verbunden sind und dass das Teleskoprohr (4) vorzugsweise mit dem einen Rohr (3) fest und mit dem anderen Rohr (2) axial begrenzt beweglich verbunden ist.

5. Sperrbalken nach einem der vorhergehenden Ansprüche, **dadurch gekennzeichnet, dass** mindestens an einem Ende ein rohrförmiges Endstück (5) vorgesehen ist, das fest mit dem daran anschließenden Rohr (2, 3) des Sperrbalkens verbunden ist, an welchem Endstück (5) die hakenförmigen Formschlusselemente (9) angeordnet sind und in dem das Steuerelement (12) zumindest teilweise aufgenommen und axial begrenzt beweglich geführt ist.

6. Sperrbalken nach einem der vorhergehenden Ansprüche, **dadurch gekennzeichnet, dass** die hakenförmigen Formschlusselemente (9) an ihren sperrbalkenseitigen Enden nahe dem freien Ende des Endstücks (5) an diesem angelenkt sind, derart, dass deren Schwenkachsen parallel zueinander und in einer Querebene angeordnet sind, welche senkrecht zur Längsachse des Sperrbalkens liegt.

7. Sperrbalken nach einem der vorhergehenden Ansprüche, **dadurch gekennzeichnet, dass** das Steuerelement (12) mit den hakenförmigen Formschlusselementen (9) derart bewegungsgekoppelt ist, dass beim Einfahren des Steuerelements (12) in den Sperrbalken die hakenförmigen Formschlusselemente (9) von ihrer offenen in die geschlossene Stellung bewegt werden.

8. Sperrbalken nach einem der vorhergehenden Ansprüche, **dadurch gekennzeichnet, dass** das Steuerelement (12) Ausnehmungen (14) an seinen Längsseiten aufweist, in welche Vorsprünge (11) eingreifen, die an den hakenförmigen Formschlusselementen (9) mit radialem Abstand zu deren Schwenkachse angeordnet sind.

9. Sperrbalken nach einem der vorhergehenden Ansprüche, **dadurch gekennzeichnet, dass** das Steuerelement (12) in Ausfahrrichtung federkraftbeaufschlagt ist.

10. Sperrbalken nach einem der vorhergehenden Ansprüche, **dadurch gekennzeichnet, dass** mindestens ein Sperrkörper (21), vorzugsweise in Form einer Kugel (21) in mindestens einer Ausnehmung (20) eines Endstücks (5) angeordnet ist, welcher die Axialbewegung zwischen dem Steuerelement (12) und dem Endstück (5) sperrt, wenn der Sperrkörper (21) in der Ausnehmung (20) des Endstücks (5) und in einer seitlichen Ausnehmung, vorzugsweise Nut (15), des Steuerelements (12) angeordnet ist.

11. Sperrbalken nach Anspruch 10, **dadurch gekennzeichnet, dass** umfänglich des Endstücks (5)eine Riegelhülse (17) axial verschiebbar vorgesehen ist, welche in einer federbelasteten Endstellung den Sperrkörper (21) in seiner Sperrstellung formschlüssig verriegelt und welche in einer entgegen der Federkraft gebildeten Entriegelstellung einen Freiraum (19) für einen Teil des Sperrkörpers (21) bildet.

## Claims

1. A blocking bar for a load securing system with lashing points which comprise at least one web (24), with hook-like positive-fit elements (9) at the ends of the blocking bar, wherein two hook-like positive-fit elements (9) which are open to one another, in a first open position for receiving a web (24) are arranged distanced at least at their free ends and in a second closed position are arranged positively embracing the web (24) are arranged on at least one, preferably both ends of the blocking bar, **characterised in that** a control element (12) for controlling the position of the positive-fit elements (9) is provided, said control element being arranged in an axially displaceable manner in the longitudinal direction of the blocking bar and being controllable by web (24) of a lashing point.

2. A blocking bar according to claim 1, **characterised in that** the second closed position is lockable.

3. A blocking bar according to claim 1 or 2, **characterised in that** the blocking bar comprises tubes (2, 4) which are telescopic to one another, preferably in a limited manner, for the length change.

4. A blocking bar according to one of the preceding claims, **characterised in that** the blocking bar comprises two tubes (2, 3) which are connected by a common telescopic tube (4) and that the telescopic tube (4) is preferably connected to one tube (3) in a fixed manner and to the other tube (2) in an axially limitedly movable manner.

5. A blocking bar according to one of the preceding claims, **characterised in that** a tubular end-piece (5) which is fixedly connected to the tube (2, 3) of the blocking bar which fixedly connects thereto is provided at least at one end, on which end-piece (5) the hook-like positive-fit elements (9) are arranged and in which the control element (12) is at least partly received and is movably guided in an axially limited manner.

6. A blocking bar according to one of the preceding claims, **characterised in that** the hook-like positive-fit elements (9) at their ends on blocking bar side are articulated on the end piece (5) close to the free end of this, in a manner such that their pivot axes are arranged parallel to one another and in a transverse plane which lies perpendicularly to the longitudinal axis of the blocking bar.

7. A blocking bar according to one of the preceding claims, **characterised in that** the control element (12) is coupled in movement to the hook-like positive-fit elements (9) in a manner such that on movement of the control element (12) into the blocking bar, the hook-like positive-fit elements (9) are moved from their open into the closed position.

8. A blocking bar according to one of the preceding claims, **characterised in that** the control element (12) comprises recesses (14) on its longitudinal sides, into which recesses projections (11) engage, said projections being arranged on the hook-like positive-fit elements (9) at a radial distance to their pivot axis.

9. A blocking bar according to one of the preceding claims, **characterised in that** the control element (12) is subjected to a spring force in the extension direction.

10. A blocking bar according to one of the preceding claims, **characterised in that** at least one blocking body (21) preferably in the form of a ball (21) is arranged in at least one recess (20) of an end piece (5), said blocking body blocking the axial movement between the control element (12) and the end-piece (5) when the blocking body (21) is arranged in the recess (20) of the end-piece (5) and in a lateral recess, preferably groove (15), of the control element (12).

11. A blocking bar according to claim 10, **characterised in that** a locking sleeve (17) is provided in an axially displaceable manner peripherally of the end piece (5), said locking sleeve in a spring-loaded end position positively locking the blocking body (21) in its blocking position and in an unlocking position which is formed counter to the spring force forms a free space (19) for a part of the blocking body (21).

## Revendications

1. Barre de blocage pour un système de sécurisation de charge avec des points d'amarrage qui comprennent au moins une barrette (24), avec des éléments à complémentarité de forme (9) en forme de crochets disposés aux extrémités de la barre de blocage, deux éléments à complémentarité de forme (9) en forme de crochets, ouverts l'un vers l'autre, étant disposés à au moins une, de préférence aux deux extrémités, de la barre de blocage, lesquels, dans une première position, ouverte, sont disposés de façon espacée l'un de l'autre au moins à leurs extrémités libres, pour recevoir une barrette (24) et, dans une deuxième position, fermée, sont disposés de façon à entourer la barrette (24) avec complémentarité de forme, **caractérisée en ce qu'**il est prévu un élément de commande (12) pour commander la position des éléments à complémentarité de forme (9), qui est disposé de façon axialement déplaçable dans la direction longitudinale de la barre de blocage et est adapté pour être commandé par une barrette (24) d'un point d'amarrage.

2. Barre de blocage selon la revendication 1, **caractérisée en ce que** la deuxième position, fermée, est verrouillable.

3. Barre de blocage selon la revendication 1 ou 2, **caractérisée en ce que** la barre de blocage comprend, pour un changement de longueur, des tuyaux (2, 4) adaptés pour pouvoir être télescopés l'un par rapport à l'autre, de préférence de façon limitée.

4. Barre de blocage selon l'une des revendications précédentes, **caractérisée en ce que** la barre de blocage comprend deux tuyaux (2, 3) qui sont reliés par un tuyau télescopique commun (4) et **en ce que** le tuyau télescopique (4) est relié, de préférence, de façon fixe à un tuyau (3) et de manière axialement déplaçable, de façon limitée, à l'autre tuyau (2).

5. Barre de blocage selon l'une des revendications précédentes, **caractérisée en ce qu'**il est prévu, à au moins une extrémité, une partie d'extrémité tubulaire (5) qui est reliée au tuyau attaché (2, 3) de la barre de blocage, à laquelle partie d'extrémité (5) sont disposés les éléments à complémentarité de forme (9) en forme de crochets et dans laquelle l'élément de commande (12) est reçu au moins partiellement et est guidé, de façon limitée, de manière axialement mobile.

6. Barre de blocage selon l'une des revendications précédentes, **caractérisée en ce que** les éléments à complémentarité de forme (9) sont articulés, à leurs extrémités du côté de la barre de blocage, proche de la partie d'extrémité (5), à cette dernière de façon telle que leurs axes de pivotement soient parallèles les uns aux autres et disposés dans un plan transversal qui est perpendiculaire à l'axe longitudinal de la barre de blocage.

7. Barre de blocage selon l'une des revendications précédentes, **caractérisée en ce que** l'élément de commande (12) est relié en mouvement aux éléments à complémentarité de forme (9) en forme de crochets de façon telle que, lors de la rentrée de l'élément de commande (12) dans la barre de blocage, les éléments à complémentarité de forme (9) en forme de crochets soient déplacés de leur position ouverte à la position fermée.

8. Barre de blocage selon l'une des revendications précédentes, **caractérisée en ce que** l'élément de commande (12) est pourvu, sur ses côtés longitudinaux, d'évidements dans lesquels s'engagent des saillies (11) qui sont disposées sur les éléments à complémentarité de forme (9) en forme de crochets à une distance radiale de leur axe de pivotement.

9. Barre de blocage selon l'une des revendications précédentes, **caractérisée en ce que** l'élément de commande (12) est soumis à un effort élastique agissant dans la direction de sortie.

10. Barre de blocage selon l'une des revendications précédentes, **caractérisée en ce qu'**au moins un corps de blocage (21), de préférence en la forme d'une bille (21), est disposé dans au moins un évidement (20) d'une partie d'extrémité (5), lequel bloque le mouvement axial entre l'élément de commande (12) et la partie d'extrémité (5), lorsque le corps de blocage (21) est situé dans l'évidement (20) de la partie d'extrémité (5) et dans un évidement latéral, de préférence une rainure (15), de l'élément de commande (12).

11. Barre de blocage selon la revendication 10, **caractérisée en ce qu'**il est prévu, sur le pourtour de la partie d'extrémité (5), une douille de verrouillage (17) axialement déplaçable qui, dans une position finale sous effort élastique, verrouille le corps de blocage (21) en complémentarité de forme dans sa position de blocage et qui, dans une position de déverrouillage formée à l'encontre de l'effort élastique, forme un espace libre (19) pour une partie du corps de blocage (21).
